Europäisches Patentamt

European Patent Office

Office européen des brevets

(11) Veröffentlichungsnummer: **0 435 231 B1**

(12) **EUROPÄISCHE PATENTSCHRIFT**

(45) Veröffentlichungstag der Patentschrift: **22.06.94**

(51) Int. Cl.5: **H05B 41/392**, H05B 41/29

(21) Anmeldenummer: **90125304.7**

(22) Anmeldetag: **21.12.90**

(54) **Verfahren zum Dimmen von Leuchtstoffröhren.**

(30) Priorität: **29.12.89 DE 3943350**
**29.03.90 DE 4010112**

(43) Veröffentlichungstag der Anmeldung:
**03.07.91 Patentblatt 91/27**

(45) Bekanntmachung des Hinweises auf die
Patenterteilung:
**22.06.94 Patentblatt 94/25**

(84) Benannte Vertragsstaaten:
**AT BE CH DE DK ES FR GB IT LI LU NL SE**

(56) Entgegenhaltungen:
**EP-A- 0 079 969**
**EP-A- 0 394 966**
**AT-C- 380 373**
**DE-A- 3 243 316**
**DE-A- 3 338 464**

(73) Patentinhaber: **Zumtobel Aktiengesellschaft**
**Höchster Strasse 8**
**A-6850 Dornbirn(AT)**

(72) Erfinder: **Apsner, Bernhard**
**Herrngutgasse 12**
**A-6923 Lauterbach(AT)**
Erfinder: **Luger, Siegfried**
**Steinacker 21A**
**A-6850 Dornbirn(AT)**
Erfinder: **Pabst, Wolfgang, Dr.**
**Josef Ganalstrasse 41**
**A-6850 Dornbirn(AT)**

(74) Vertreter: **Schmidt-Evers, Jürgen, Dipl.-Ing. et**
**al**
**Patentanwälte Mitscherlich & Partner**
**Postfach 33 06 09**
**D-80066 München (DE)**

## Beschreibung

Die Erfindung betrifft ein Verfahren zum Steuern der Helligkeit (Dimmen) bzw. zum Betreiben von Gasentladungslampen gemäß dem Oberbegriff des Anspruchs 1 bzw. 6.

Verfahren zur Helligkeitseinstellung von Leuchtstofflampen bzw. Gasentladungslampen sowie Schaltungsanordnungen zur Durchführung derartiger Verfahren erlauben es, die bisher nur mit konstanter Nenn-Helligkeit betreibbaren Leuchtstofflampen wie gewöhnliche Glühlampen zu dimmen (in ihrer Helligkeit einzustellen). Herkömmliche mechanische Starterschaltungen vermögen die Helligkeitseinstellung von Leuchtstofflampen nicht zu gewährleisten, auch sind herkömmliche Dimmer, wie sie für Glühlampen Einsatz finden, für Leuchtstofflampen nicht verwendbar. Es werden daher sogenannte elektronische Vorschaltgeräte (EVG) eingesetzt, die eine hochfrequente Wechselspannung an die Leuchtstoffröhren abgeben und auf diese Weise sowohl einen frequenzgesteuerten Startvorgang (Zündvorgang) der Gasentladungslampe als auch einen frequenzgesteuerten Dimmbetrieb ermöglichen.

Ein Verfahren der genannten Art ist beispielsweise aus der EP 0 059 064 bekannt. Dort wird ein fremdgeführter transistorisierter Wechselrichter eingesetzt, der über einen Serienresonanzkreis eine direkt beheizte Gasentladungslampe speist. Die beiden Heizwendel der Gasentladungslampe werden über einen zur Gasentladungslampe parallelgeschalteten Parallel-Heizkondensator verbunden. In den Serienresonanzkreis ist ferner eine induktive Stromerfassung eingeschaltet, die den Lampenstrom mißt. Durch Verschieben der Ausgangsfrequenz des selbstgeführten Wechselrichters von einer Heizfrequenz von 50kHz in Richtung zu der nahe der Resonanzfrequenz des Serienschwingkreises liegenden Betriebsfrequenz von 28kHz kann die Lampe sowohl vorgeheizt werden (50kHz), wie auch durch Resonanzspannungsüberhöhung oberhalb der Resonanzfrequenz gezündet werden ($f_{zünd}$>28kHz). Nach Zünden der Lampe wird der nunmehr mit der Lampe gedämpfte Serienresonanzschwingkreis mit der Nenn-Betriebsfrequenz von 28kHz betrieben. Zur Helligkeitsänderung, d.h. zum Dimmen der Gasentladungslampe kann die Ausgangsfrequenz des selbstgeführten Wechselrichters nun wieder erhöht werden. Gleichzeitig mit der Erhöhung der Ausgangsfrequenz vergrößert sich durch den bei höherer Frequenz sinkenden Schein-Widerstand des Parallel/Heizkondensators der Heizstrom in den Heizwendeln. Die erwünschte Anhebung der Ausgangsfrequenz des Wechselrichters zur Helligkeitsänderung erfolgt über einen Komparator (als Regler), dessen Ausgangssignal einen den Wechselrichter ansteuernden Frequenzgenerator in seiner Frequenz verschiebt. Der eine Eingangsanschluß des Komparators ist mit einem Dimm-Potentiometer verbunden, dem anderen Eingangsanschluß wird das Strom-Meßsignal des induktiven Lampenstromsensors zugeführt. Auf diese Weise wird durch Regelung des Lampenstromes über reine Frequenzänderung des selbstgeführten Wechselrichters eine stabile Helligkeitsänderung erzielt.

Aus der AT-B-380 373 ist ein elektronisches Vorschaltgerät bekannt. Dieses weist einen asymmetrischen Ausgangszweig auf, der zwischen einer positiven Versorgungsgleichspannung und einem Bezugspotential geschaltet ist. Der Ausgangszweig weist eine in Reihe geschaltete obere und untere Zweighälfte auf, wobei eine Steuerschaltungsanordnung das Maß der Unsymmetrie zwischen den beiden Zweighälften verändert, um die Frequenz der zwischen beiden Zweighälften abgegebenen Ausgangs-Wechselgröße zu variieren.

Aus der DE-OS 33 38 464 von der im Oberbegriff der Patentansprüche 1 und 6 ausgegangen wird, ist sowohl ein elektronisches Vorschaltgerät mit selbstschwingendem Wechselrichter als auch ein solches mit fremdgesteuertem Wechselrichter bekannt. Dabei speist ein MOS-FET-Transistoren aufweisender Ausgangszweig des Wechselrichters einen Serienresonanzkreis, der aus einer Kapazität und einer Parallelschaltung aus je einer in Reihe geschalteten Gasentladungslampe und Induktivität gebildet wird. Hierbei ist es nun einerseits möglich, das Tastverhältnis von 50%, bzw. 1:1, stets unverändert zu erhalten und lediglich die Ausgangs-Frequenz f des Wechselrichters für die Helligkeitsverminderung zu erhöhen, dies entspricht dem oben genannten Beispiel. Andererseits ist es zur Helligkeitsregelung einer Gasentladungslampe, insbesondere bei einem selbstgeführten Wechselrichter, möglich und bekannt, das Impuls/Pausenverhältnis, d.h. das Tastverhältnis, der von dem Mittelabgriff des Ausgangszweiges des Wechselrichters abgegebenen hochfrequenten Wechselspannung zu verringern. Dieses wird von einem symmetrischen 1:1 Verhältnis bis auf etwa 1:10, d.h. 10%, reduziert, womit die Lichtstärke der Leuchtstofflampe um mehr als den Faktor 10 zurückgeht. Die Reduzierung des Tastverhältnisses wirkt bei rechteckförmiger, nicht sinusförmiger Ausgangs-Wechselspannung als eine Amplitudenerhöhung der Oberwellen bei gleichzeitiger Amplitudenreduzierung der Grundwelle. Dies bewirkt denselben Effekt, wie reine Frequenzvariation, nur wird bei reiner Tastverhältnisänderung die Frequenz der Grundwelle beibehalten und die Amplituden (Fourierkoeffizienten) der Oberwellen verschoben.

Mehr beiläufig wird in der letztgenannten Druckschrift die Kombination einer Frequenz- und Impulsbreitensteuerung erwähnt, diese verringert die Stromaufnahme des Wechselrichters und erhöht seine Ausgangsfrequenz, womit die Lampenhelligkeit herabgesetzt werden kann.

Es ist **Aufgabe** der Erfindung, verbesserte Verfahren zum Steuern der Helligkeit einer Gasentladungslampe zu schaffen.

Die Aufgabe ist bei einem Verfahren gemäß dem Oberbegriff des Anspruchs 1 erfindungsgemäß durch die im Kennzeichen des Anspruchs 1 angegebenen Merkmale **gelöst**.

Alternativ hierzu wird die Aufgabe bei einem Verfahren gemäß Oberbegriff des Anspruchs 6 durch seine kennzeichnenden Merkmale **gelöst**.

Ein wesentlicher Zweck der Erfindung liegt dabei darin, den Dimmbetrieb, d.h. den Betrieb der Lampe bei reduzierter Helligkeit, zu **stabilisieren**. Die im Kennzeichen des Anspruchs 1 angegebenen Merkmale wirken dahingehend, daß die **Lampenhelligkeits-Kennlinie** des die Lampe beinhaltenden Serienresonanzkreises **in ihrer Form verändert** wird. Durch diese Änderung wird bei sinkender Helligkeit der Lampe gleichzeitig ihre Lampenhelligkeits-Kennlinie verändert. Diese Veränderung ebnet den steilen Bereich in der jeweils gültigen Helligkeits-Kennlinie und ermöglicht eindeutig definierte, stabile Betriebspunkte auch für stark gedimmten Betrieb.

Durch die im Kennzeichen des Anspruchs 1 angegebenen Merkmale wird vermieden, daß die genannten Betriebspunkte bzw. Arbeitspunkte in dem steilen Abschnitt einer für eine jeweilige Frequenz oder ein jeweiliges Tastverhältnis gültigen Lampenhelligkeits-Funktion zu liegen kommen. Insbesondere bei einem **freischwingenden (selbstgeführten) Wechselrichter,** bei dem die Schwingungsfrequenz u.a. von der Höhe der Netzspannung bzw. der Höhe der den Wechselrichter speisenden Gleichspannung abhängt, ist die erfindungsgemäße Stabilisierung des Dimmbetriebes ohne zusätzlichen Regler besonders wirksam.

Die für einen Dimmbetrieb vorteilhafte Erhöhung des Heizstromes wird durch die kombinierte Frequenzerhöhung und Tastverhältnisreduzierung verstärkt erzielt, dieser Effekt wirkt für die in ihrer Helligkeit reduzierte Gasentladungslampe zusätzlich stabilisierend.

Gemäß einer vorteilhaften Weiterbildung des erfindungsgemäßen Verfahrens kann durch beliebige Vorgabe einer **nichtlinearen Steuerkurve** die Abhängigkeit der Helligkeit von einer diese steuernden Steuerspannung oder Potentiometerstellung linearisiert werden.

Die erfindungsgemäßen Verfahren gemäß Anspruch 1 und Anspruch 6 können einerseits mit zweidimensionalen **Kennlinien** oder mit dreidimensionaler **Kennfläche** arbeiten. Die unabhängige Variable für eine Kennlinie bildet entweder die Frequenz f oder das Tastverhältnis T, der abhängige Parameter ist in beiden Fällen die abgegebene Lampenleistung $P_{ab}$ bzw. die Lampenhelligkeit. Die im zweidimensionalen Fall jeweils nicht als Abszissen-Variable eingesetzte weitere Variable bildet einen Parameter, mit dem die im Oberbegriff des Anspruchs 1 erläuterte ineinander liegende Schar von glockenförmigen Kennlinien gebildet werden. Ein jeweiliges Paar aus einem Tastverhältnis $d_1$ und einer Frequenz $f_1$ ergibt eine eindeutige Lampenhelligkeit, da sowohl die Kennlinie als auch der Abszissenwert festliegt, womit der Ordinatenwert ablesbar ist. Mittels erfindungsgemäßer Funktionsgeber ist es möglich, abhängig von einer Führungsgröße, die entweder $P_{soll}$ (erwünschte Lampenleistung) oder die Frequenz f oder das Tastverhältnis d sein kann, eine oder beide Parameter (Frequenz und Tastverhältnis) in erwünschter Weise dem Wechselrichter des EVG vorzugeben. Die jeweilige Vorgabe kann **lampenindividuell** erfolgen, demnach abhängig von der Lampenart, beispielsweise Krypton oder Argon, oder abhängig von der eingesetzten Lampen-Nennleistung $P_N$. Die Verbindung aller Betriebspunkte bildet erfindungsgemäß eine Steuerkurve, die sowohl linear als auch bewußt verzerrt, d.h. nichtlinear sein kann.

Neben der Möglichkeit der Steuerung der Helligkeit der Gasentladungslampe über zweidimensionale Kennlinien besteht alternativ die Möglichkeit der Steuerung über ein dreidimensionales Kennlinienfeld, d.h. eine lampenspezifische Kennfläche. Die Steuerkurve wird hierbei im Raum gebildet, auf der Oberfläche der Kennfläche. Die jeweilige Projektion dieser im Raum liegenden Steuerkurve auf die von den Achsen $P_{ab}$ und f aufgespannte Ebene oder die von den Achsen $P_{ab}$ und d aufgespannte Ebene bildet die zuvor erläuterte zweidimensionale Steuerkurve. Der Vorteil einer dreidimensionalen Vorgabe liegt in einem einzelnen Funktionsgeber, der ebenfalls abhängig von einer Führungsgröße, beispielsweise $P_{soll}$ ein jeweiliges Paar aus Frequenz und Tastverhältnis auswählt. Die Gleichsetzung von Sollwert (FÜhrungsgröße $P_{soll}$) und Istwert, d.h. abgegebene Lampenleistung $P_{ab}$, ermöglicht hierbei die Einstellung einer Wunsch-Helligkeit ohne Einsatz eines Reglers. Die erfindungsgemäße Steuerkurve wird dabei gemäß Anspruch 6 auf die Kennfläche gelegt, wodurch jeder erwünschten Lampenhelligkeit, d.h. jeder Lampenleistung $P_{ab}$, für $P_{soll} = P_{ab}$ ein eindeutiges Wertepaar aus Tastverhältnis und Frequenz zuordnungsbar ist.

Die erwünschte Helligkeit, bzw. die erwünschte abgegebene Lampenleistung $P_{soll}$, kann gemäß vorteilhafter Weiterbildung entweder mittels Potentiometer oder einer extern zugeführten Steuerspannung $u_{St}$ erreicht werden.

Ein elektronisches Vorschaltgerät mit vorzugsweise freischwingendem Wechselrichter ist **ein-**

**fach und modular** für den Dimmbetrieb anpaßbar. Die Modulation der Unsymmetrie in einem Wechselrichter- Ausgangszweig erlaubt die gleichzeitige Veränderung des Tastverhältnisses d sowie der Frequenz f einer Ausgangs-Wechselspannung oder -strom. Die Steuerschaltungsanordnung **moduliert** hierbei die **bestehende Unsymmetrie** derart, daß ausgehend von einer im Tastverhältnis symmetrischen Nennbetriebs-Frequenz ein Dimmbetrieb durch gleichzeitiges Erhöhen der Ausgangs-Frequenz sowie Absenken des Tastverhältnisses ermöglicht wird. Die Steuerschaltungsanordnung ist hierbei modular einem fertigen EVG **hinzufügbar**, so daß ein und dasselbe EVG sowohl für den Nennbetrieb als auch -mit Zusatz der Steuerschaltungsanordnung- für den Dimmbetrieb einsetzbar ist.

Die Unsymmetrie wird vorteilhafterweise von ungleichen ohmschen Widerständen gebildet und mittels eines dem größeren der beiden Widerständen parallelgeschalteten steuerbaren Widerstandes, vorzugsweise eines MOS-FETs, kann zwischen voller Symmetrie (50% Tastverhältnis) und durch Widerstandswertunterschied bedingter Unsymmetrie variiert werden. Die Unterschiede in den Widerständen wirken zurück auf die Sättigungszeiten des zur Steuerung des selbstgeführten Wechselrichters mit seiner Primärwicklung in den Serienresonanzkreis eingefügten Steuerübertragers. Seine Sekundärwicklungen steuern die Steueranschlüsse der Ausgangs-Leistungshalbleiter des Wechselrichters.

Ein erfindungsgemäßes Verfahren sowie ein Realisierungsbeispiel eines elektronischen Vorschaltgerätes werden nachfolgend anhand der Zeichnung beschrieben. Es zeigen

Fig. 1　ein Leistungs-Frequenzdiagramm mit einer Lampenhelligkeits-Kennlinie für ein Tastverhältnis von 50% und einem beispielhaft eingestellten Betriebspunkt B4,

Fig. 2　drei Zeitdiagramme einer tastfrequenzvariablen Rechteckschwingung, wie sie von einem fremdgeführen oder selbstgeführten Wechselrichter abgegeben werden,

Fig. 3　ein der Fig. 1 ähnliches Diagramm, an dem die erfindungsgemäße Änderung der Lampenhelligkeits-Kennlinie sowie eine lineare beispielhafte Steuerkurve I erläutert wird,

Fig. 4　ein elektronisches Vorschaltgerät in Ausführung mit selbstschwingendem Wechselrichter,

Fig. 5a　ein Detail-Schaltbild einer Steuerschaltungsanordnung zur Modulation der Unsymmetrie des Wechselrichters von Fig. 4,

Fig. 5b　ein Detailschaltbild zur Erläuterung der sättigungsgesteuerten Frequenz/Tastverhältnis-Modulation anhand des unteren Teilzweiges des Wechselrichterausgangszweiges,

Fig. 6　ein dreidimensionales Kennlinienfeld (-Fläche) gebildet von den unabhängigen Parametern f (Frequenz) und d (Tastverhältnis) und der die Kennfläche in z-Richtung bildenden abhängigen Variablen $P_{ab}$ (Lampenhelligkeit), wobei $P_{ab}$ als Funktion von d und f dargestellt ist,

Fig. 7　eine Lampenhelligkeits-Kennlinie in Abhängigkeit des Tastverhältnisses mit dem Parameter "Frequenz" zur Erläuterung einer reinen Frequenzsteuerung,

Fig. 8　eine Lampenhelligkeits-Kennlinie in Abhängigkeit von der Frequenz mit dem Parameter "Tastverhältnis" zur Erläuterung einer reinen Tastverhältnissteuerung,

Fig. 9　ein der Fig. 3 entsprechendes Diagramm mit Erläuterung einer nichtlinearen Steuerkurve II in Beabsichtigung der Linearisierung der Lampenhelligkeitsfunktion, abhängig von einer Steuerspannung oder einer Potentiometeränderung.

Fig. 10a　Funktionsgeber, der ausgehend von der in Figur 6 dargestellten Kennfläche F abhängig von einer Führungsgröße, hier $P_{soll}$, das zu einer gewünschten Helligkeit zugehörige lampenindivuduelle Wertepaar aus einer Frequenz (f) und einem Tastverhältnis (d) an den Wechselrichter 20 abgibt,

Fig. 10b　alternative Vorgabe der jeweiligen Frequenz und des zugehörigen Tastverhältnisses über einen einfachen weiteren Funktionsgeber, der abhängig von einer Frequenz, welche hier als Führungsgröße eingesetzt wird, ein zugehöriges Tastverhältnis abgibt,

Fig. 11　Realisierungsbeispiel für ein EVG, welches den Lampen-Lastkreis X speist, und dessen Wechselrichter 20 die gemäß Figur 10a und 10b erzeugten Wertepaare aus Tastverhältnis und Frequenz zuführbar sind.

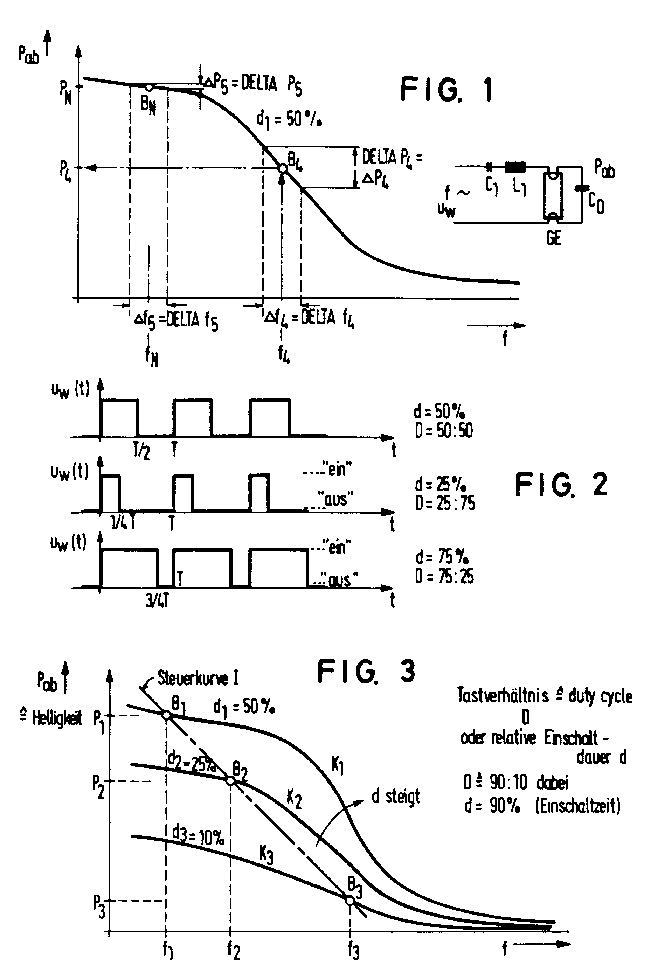

Fig. 1 zeigt eine Lampenhelligkeits-Kennlinie bzw. die Funktion der abgegebenen Leistung $P_{ab}$, welche der Helligkeit entspricht, in Abhängigkeit von der Frequenz einer einem Serienresonanzkreis mit Gasentladungslampe GE zugeführten Wechselspannung. Es ist ein beispielhafter Betriebspunkt B4 eingezeichnet, der bei einer eingestellten Frequenz $f_4$ eine abgegebene Leistung $P_4$ bedingt. Diese abgegebene Leistung $P_4$ entspricht einer bestimmten Helligkeit $H_4$.

Zunächst ist anhand der Lampenhelligkeits-Kennlinie ersichtlich, daß die Lampenhelligkeit grundsätzlich durch eine Frequenzänderung erzielt werden kann. Die Lampenhelligkeits-Kennlinie verläuft bei niedrigen Frequenzen sowie bei hohen Frequenzen relativ flach, d.h. die Leistungsänderung $\Delta P_{ab}$ für ein vorgegebenes $\Delta f$ ist gering, und weist einen diese beiden flachen Bereiche verbindenden steilen Bereich mit einem hohen Maß an Leistungsänderung für dieselbe vorgegebene Frequenzänderung auf. Die Eigenschaft dieser Lampenhelligkeits-Funktion, die hier beispielsweise für ein symmetrisches Tastverhältnis von $d_1 = 50$ % bzw. 1:1 gezeigt wird, ist abhängig von den Eigenschaften des Serienresonanzkreises L1/C1 sowie gasentladungslampenabhängig. Eine ähnliche Lampenhelligkeits-Kennlinie ergibt sich für eine konstante Frequenz bei variablem Tastverhältnis.

Die Differenzgröße $\Delta$ wird im folgenden mit "DELTA" bezeichnet.

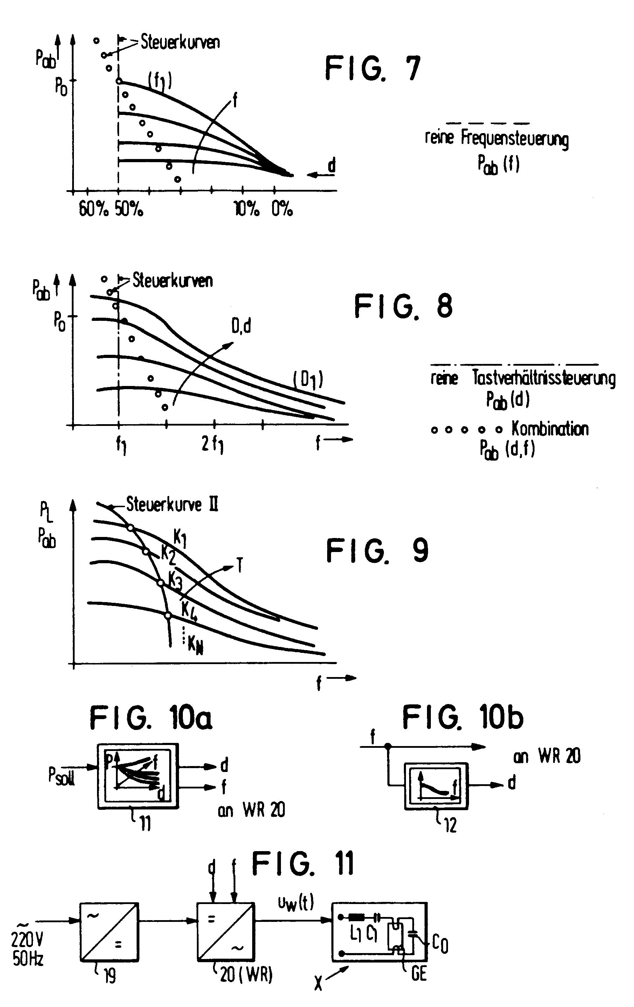

Wird mittels eines elektronischen Vorschaltgerätes (EVG) bzw. des in diesem enthaltenen Wechselrichters 20 (s. Fig. 11) eine vorgegebene Frequenz $f_4$ eingestellt und diese dem die Gasentladungslampe GE enthaltenden Serienresonanzkreis X zugeführt, so stellt sich für einen bestimmten Lampentyp bei dem erwähnten Tastverhältnis von $d_1 = 50$ % ein Arbeitspunkt B4 ein, der einer abgegebenen Leistung $P_4$ bzw. $H_4$ entspricht. Eine geringfügige Frequenzschwankung, in Fig. 1 mit DELTA $f_4$ bezeichnet, die beispielhaft symmetrisch zu $f_4$ liegt, führt nun aufgrund der steilen Kennlinie zu einer vergleichsweise hohen Leistungsänderung DELTA $P_4$. Diese relativ hohe Leistungsänderung äußert sich bei nicht konstanter Frequenz in einem Flackern der Lampe, welches für das menschliche Auge als unangenehm und störend empfunden wird. Ein geringfügiges Verschieben der Frequenz $f_4$ bewirkt demnach einerseits zwar eine starke stationäre Helligkeitsänderung, jedoch andererseits die unerwünschte Flackereigenschaft. Eine parasitäre geringfügige Frequenzänderung DELTA $f_4$ kann, insbesondere bei der Verwendung von selbstgeführten Wechselrichtern, von einer nicht konstanten (schwankenden) Netzspannung verursacht werden.

Der Arbeitspunkt (Betriebspunkt) B4 kann nun beispielsweise mit dem Nenn-Arbeitspunkt BN, der sich bei einer Nenn-Arbeitsfrequenz $f_N$ einstellt, verglichen werden. Hier gibt die Lampe die Nennleistung $P_N$, was der Nenn-Helligkeit entspricht, ab. Die Nenn-Frequenz liegt üblicherweise geringfügig oberhalb der Schwinkreisresonanzfrequenz, beispielhaft bei ca. 20kHz, vorzugsweise oberhalb der Hörfrequenz. Die an dem genannten Nenn-Arbeitspunkt BN auftretende Änderung der Leistungsabgabe für eine vorgegebene geringfügige Frequenzänderung DELTA $f_5$ beträgt nur DELTA $P_5$. Diese Lampen-Helligkeitsänderung ist um ein Vielfaches geringer, als die am Dimm-Betriebspunkt $B_4$ durch eine gleiche Frequenzänderung (bei DELTA $f_4 = $ DELTA $f_5$) bewirkte Lampenhelligkeitsänderung. Somit wird ersichtlich, daß ausgehend vom Nennbetrieb, wo eine Gasentladungslampe nicht oder nur gering flackert, ein Dimmen der Lampe mit einem elektronischen Vorschaltgerät durch alleinige Frequenzerhöhung (bei konstantem Tastverhältnis $d_1$) zu einem erhöhten Flackern, d.h. zu Instabilität, führt.

Hier setzt der Erfindungsgedanke an, er ermöglicht die Änderung der Lampenhelligkeits-Kennlinie gemäß Fig. 3 durch Variation des Tastverhältnisses d. Das Tastverhältnis (relatives Tastverhältnis d, absolutes Tastverhältnis D) ist definiert als das Verhältnis von Einschaltdauer zu Ausschaltdauer der hochfrequenten von dem EVG abgegebenen Wechselspannung $u_W$. Ein symmetrisches Tastenverhältnis bedeutet, daß die Einschaltzeit sowie die Ausschaltzeit der Wechselspannung identisch sind, mithin $d_{SYMM} = 50$% bzw. D = 50:50 oder 1:1. Ein Verschieben des Tastverhältnisses zu geringeren relativen Tastverhältnissen d<50% bedeutet eine Reduzierung der Einschaltzeit bei gleichzeitiger Vergrößerung der Ausschaltzeit. Als Summe verbleibt die gleiche Zeit T, so daß die Frequenz f = 1/T unverändert ist (Fig. 2).

Gemäß Fig. 3 wird nun durch Senken des Tastverhältnisses bzw. Senken der relativen Einschaltdauer d die Lampenhelligkeits-Kennlinie flacher. Der steile Bereich verliert an Steigung, das Risiko von frequenzänderungsinduzierten Flackerungen der Gasentladungslampe sinkt.

Es läßt sich eine Steuerkurve I definieren, die gebildet ist durch alle sich ergebenden Betriebspunkte B1, B2, B3..., welche für jeweilige Frequenz/Tastverhältnis-Kombinationen gelten. Die Verbindung aller Betriebspunkte bildet die Steuerkrurve I. Diese kann beliebige Formen aufweisen. B1,B2,B3 sind beispielhaft herausgegriffene Betriebspunkte. Auch die gezeigten 3 Kennlinien K1,K2,K3, sind beispielhafte Kennlinien. Es existieren für ein kontinuierlich änderbares Tastverhältnis unendich viele glockenförmige Kennlinien, diese werden bei kontinuierlichem Durchstimmen des Tastverhältnisses d (oder der Frequenz f) kontinuierlich verschoben und in ihren Steigungen geändert. Die Steuerkurve, in Fig. 3 mit I bezeichnet und in Fig. 9 mit II bezeichnet, kann nichtlinear gewählt werden. Dies ist abhängig von der erwünschten Steuerfunktion sowie von dem eingesetzten Lampentyp. Andererseits kann eine Steuerkurve ebenfalls dadurch definiert werden, daß für viele jeweilige Kombinationen aus einer Frequenz, beispielsweise $f_2$, und einem Tastverhältnis, beispielsweise $d_2 = 25\%$, jeweils ein eindeutiger Arbeitspunkt (Betriebspunkt), hier B2, existiert. Die Frequenz gibt hierbei die Abszissenkoordinate an, während durch das Tastverhältnis die jeweils gültige Lampenhelligkeits-Funktion ausgewählt wird, auf der der Betriebspunkt für die gewählte Frequenz liegt. Auf gleiche Weise ist eine Steuerkurve definierbar, bei der in Abszissenrichtung das Tastverhältnis aufgetragen ist, während als Parameter der Schaar von Lampenhelligkeits-Kennlinien die Frequenz f herangezogen wird (Fig. 7).

Für den flackerfreien Betrieb einer Gasentladungslampe GE ist es nun relevant, die Steuerkurve in einer solchen Art verlaufen zu lassen, daß alle Betriebspunkte in dem anfänglichen flachen Bereich bzw. oberhalb des Wendepunktes der jeweils gültigen Lampenhelligkeits-Kennlinien zu liegen kommen.

Die in Fig. 3 beispielhaft eingezeichnete Steuerkurve I ermöglicht den flackerfreien Dimm-Betrieb einer Leuchtstofflampe. Die Steuerkurve ist beispielhaft durch drei Arbeitspunkte (Betriebspunkte) B1,B2 und B3 festgelegt, welche jeweils auf einer Kennlinie liegen, die für ein festes Tastverhältnis gilt. Die drei eingetragenen Kennlinien K1,K2 und K3, welche den Tastverhältnissen $d_1$,$d_2$ und $d_3$ entsprechen, bilden nur eine beispielhafte Auswahl aus einer unendlichen Zahl von Kennlinien. Die unendliche Zahl von Kennlinien entsteht bei kontinuierlich variierbarem Tastverhältnis. Jeder einstellbare Betriebspunkt auf jeder Kennlinie bildet einen Punkt der Steuerkurve I. Die Betriebspunkte werden durch Wahl des Tastverhältnisses und der Frequenz derart gewählt, daß jeder Betriebspunkt soweit wie möglich von dem Wendepunkt seiner zugehörigen Kennlinie entfernt ist. Auf diese Weise kommen die Betriebspunkte in denjenigen Kennlinienbereichen zu liegen, die eine geringe oder eine minimale Steigung aufweisen. Stehen nur bestimmte Kennlinien zur Verfügung, beispielsweise bei nichtkontinuierlichem Verändern des Tastverhältnisses, so ist jeder Betriebspunkt derart zu wählen, daß er auf einer Kennlinie zu liegen kommt, die für die erwünschte abgegebene Lampenleistung eine minimale Steigung aufweist.

Je geringer das Tastverhältnis wird, umso flacher werden die Maxima der Kennlinien und umso weniger steil werden die anfangs steilen Bereiche um den Wendepunkt. Die auf diesen Kennlinien liegenden Betriebspunkte können näher am Wendepunkt leigen, da auch hier eine vergleichsweise geringe Steigung der Kennlinie gegeben ist.

Die unabhängige Frequenz- und Tastverhältnissteuerung ist sowohl für den selbstgeführten Wechselrichter eines EVG als auch für einen fremdgeführten Wechselrichter einsetzbar. In einem fremdgeführten Wechselrichter können dabei Frequenzänderung sowie Tastverhältnisänderung unabhängig voneinander eingestellt werden. Eine Steuerkurve und Lampenhelligkeit kann somit durch zwei unabhängig voneinander wählbare Einflußgrößen frei bestimmt werden bzw. festgelegt werden.

Als Eingangsgröße für eine kombinierte (gemeinsame) Frequenz- und Tastverhältnissteuerung findet entweder eine von extern zugeführter Steuerspannung $u_{St}$ Anwendung oder die Frequenz- und Tastverhältnissteuerung erfolgt aufgrund einer Potentiometerstellung.

Bei einem selbstgeführten Wechselrichter erfolgt die kombinierte Frequenz- und Tastverhältnisänderung bereits durch Ändern der Einschaltdauer der dem Lastkreis X zugeführten Wechselspannung $u_W$. Hierdurch ändert sich bei konstanter Ausschaltzeit bereits Tastverhältnis und Frequenz.

Die Fig. 7 und 8 zeigen ein weiteres Mal Lampenhelligkeits-Kennlinien, einmal in Abhängigkeit von dem Tastverhältnis d und im zweiten Fall in Abhängigkeit von der Frequenz f (wie bereits in Fig. 3). Als Parameter wird der jeweils andere Wert verwendet, d.h. die Lampenhelligkeits-Kennlinien, die in Abhängigkeit vom Tastverhältnis d in Fig. 7 gezeigt sind, zeigen die Frequenz f als Parameter für die unterschiedlichen Kennlinien.

Auf der Ordinate ist für beide Fälle die abgegebene Leistung $P_{ab}$, die der Lampenhelligkeit entspricht, aufgetragen. Eine reine Frequenz-Steuerung sowie eine reine Tastverhältnis-Steuerung, die beide alleinig helligkeitsvariierend wirken, sind in ihren jeweiligen Diagrammen durch eine vertikale Linie darzustellen. Hierbei wird bei konstantem Tastverhältnis von 50% in Fig. 7 eine Helligkeitsvariation durch Frequenzänderung erzielt, die Steuerkurve verläuft vertikal, unterschiedliche Frequenzen führen zu unterschiedlichen Schnittpunkten (Betriebspunkten) und unterschiedlichen Lampenhelligkeiten. Auf gleiche Weise wird bei konstanter Frequenz $f_1$ in Fig. 8 eine unterschiedliche Lampenhelligkeit jeweils durch Wahl unterschiedlicher Tastverhältnisse eingestellt. Das erfindungsgemäße Neigen bzw. das freie Vorgeben der Steuerkurve entspricht einer gleichzeitigen Änderung der Frequenz f und des Tastverhältnisses d und ermöglicht den stationären flackerfreien Dimmbetrieb von Leuchtstofflampen.

Die üblicherweise nichtlineare Abhängigkeit der Lampenhelligkeit von der Frequenzänderung und/oder Tastverhältnisänderung kann durch beliebige Krümmung der Steuerkurve, wie sie beispielsweise anhand von Fig. 9 als Steuerkurve II identifiziert ist, linearisiert werden. Dies ist insbesondere bei Helligkeitssteuerungen über Steuerspannungsänderung $u_{St}$ von Vorteil, eine separate Regelung für die Helligkeitsstabilisierung ist entbehrlich.

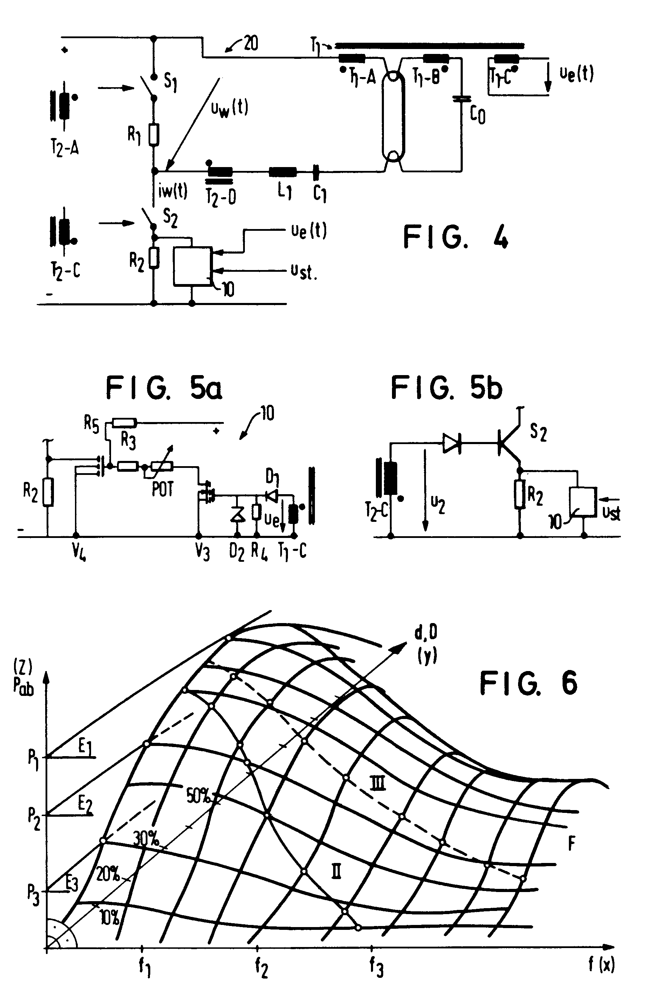

Die von den Figuren 7, 8 und 9 dargestellten zweidimensionalen Kennlinien, die auf der Ordinate jeweils $P_{ab}$ als abhängige Variable zeigten, können gemeinsam in einem dreidimensionalen Koordinatensystem dargestellt werden. Dies zeigt Figur 6. Die lampenspezifischen Kennlinien sind als isometrisches Netz in der Kennfläche F dargestellt, die Steuerkurve II oder III sind räumlich eingezeichnet. Die beiden unabhängigen Variablen Tastverhältnis d und Frequenz f verlaufen in x- und y-Richtung. In z-Richtung ist die abhängige Variable, die abgegebene Leistung $P_{ab}$ aufgetragen. Die abhängige und die unabhängigen Variablen sind vertauschbar, beispielsweise für den beschriebenen Fall, in welchem $P_{ab} = P_{soll}$ vorgegeben wird (über $u_{St}$) und entsprechend der auf der im Raum gebildeten Kennfläche F liegenden Steuerkurve 2 ein eindeutiges Paar aus Frequenz und Tastverhältnis für eine jeweilige gewünschte Lampenhelligkeit vorgegeben wird. Jeder Betriebspunkt wird als Durchstoßpunkt der Steuerkurve II oder III durch die Ebene definiert, welche parallel zu der von den Achsen d und f aufgespannten Ebene liegt und die auf der Höhe der erwünschten abgegebenen Leistung $P_{ab}$ liegt.

Fig. 7 sowie die Fig. 8 können aus der Kennfläche F abgeleitet werden. Beispielsweise die Fig. 8 wird gebildet durch alle Schnittkurven, die zwischen der Kennfläche F und Ebenen existieren, welche zu der Ebene parallel verlaufen, die durch die Achsen f und $P_{ab}$ gebildet werden. Ein Parallelverschieben dieser Ebenen in Richtung d-Achse bildet als jeweilige Schnittkurve mit der Kennfläche F von Fig. 6 die in Fig. 8 dargestellten Kennlinien. Gleiches gilt für Ebenen, die parallel zu der Ebene verlaufen, welche von der d- und $P_{ab}$-Achse aufgespannt werden und welche ebenfalls mit der Kennfläche F Schnittkurven bilden, wenn die Ebene in Richtung der Frequenzachse f verschoben wird. Hieraus entsteht die Figur 7.

Die Schnittkurve einer Ebene, welche parallel zu der Ebene verläuft, die von den Achsen d und f aufgespannt wird, gibt all diejenigen Betriebspunkte an, die für eine bestimmte Leistung $P_{ab}$ bei vorgegebener Kennfläche F möglich sind. Einer dieser möglichen Punkte wird für die Steuerkurve II ausgewählt. Beispielsweise die Ebene $E_2$ verläuft parallel zu der von den Achsen f und d aufgespannten Ebene und liegt auf der Höhe von $P_2$. Die Schnittkurve dieser Ebene $E_2$ mit der Kennfläche F stellt all diejenigen Betriebspunkte dar, die zur Erzielung der Leistung $P_2$ möglich sind. Einer dieser Betriebspunkte wird ausgewählt zur Gewährung minimaler Flackereigenschaften, wodurch ein Punkt der Steuerkurve II festgelegt ist. Auf diese Weise kann im Bereich $0 < P_{ab} < P_N$ (Nennleistung der Lampe) zur Bildung einer vollständigen Steuerkurve II verfahren werden.

Fig. 4 zeigt einen Wechselrichter-Ausgangszweig eines selbstgeführten Wechselrichters in einem EVG zur Lampenhelligkeitsänderung durch kombiniertes Verändern des Tastverhältnisses d und der Frequenz f der Ausgangsspannung $u_W(t)$. Die Anwendung bei einem selbstgeführten Wechselrichter ist beispielhaft zu verstehen, die Erfindung ist auch, wie beschrieben, für anders geartete Wechselrichter, beispielsweise fremdgeführte Wechselrichter einsetzbar. Selbstgeführte Wechselrichter haben den Vorteil, daß sie einfach und robust, sowie kostengünstig aufgebaut werden können, fremdgeführte Wechselrichter sind flexibler, d.h. einfacher regelbar, jedoch teurer im Aufbau.

Der bereits in Fig. 1 erwähnte Serienresonanzkreis weist zunächst die Reihenschaltung einer Induktivität $L_1$, einer Kapazität $C_1$ sowie die Reihenschaltung beider Heizwendel der GE-Lampe und eines Parallel-Heizkondensators $C_0$ auf. Der Heizkondensator $C_0$ ist parallel zur Gasentladungslampe GE geschaltet, dieses bezeichnet man als Parallel-Heizkreis. In Fig. 4 sind ferner die Primärwicklung $T_2$-D eines Steuerübertragers $T_2$ sowie die beiden Primärwicklungen $T_1$-A und $T_1$-B eines zusätzlichen Zünderkennungs-Übertragers $T_1$ in den Serienresonanzkreis eingeschaltet. Letzterer bildet eine vorteilhafte Ergänzung des Ausgangskreises, ist jedoch für deren grundsätzliche Funktion nicht erforderlich.

Die beiden Eingangs-Anschlüsse des Serienresonanzkreises werden an zwei Ausgangsanschlüsse eines Wechselrichterzweiges $S_1, R_1, S_2, R_2$ angeschlossen. Der Ausgangs-Wechselrichterzweig wird in dem Ausführungsbeispiel gebildet durch die Reihenschaltung eines ersten elektronischen Schalters S1, eines ersten Widerstandes $R_1$, eines zweiten elektronischen Schalters S2 sowie eines zweiten Widerstandes $R_2$. Dieser Ausgangszweig ist mit seinem oberen und mit seinem unteren Anschluß an eine Versorgungs-Gleichspannung +,- geschaltet. Er enthält die beiden Teilzweige S1 und $R_1$ sowie S2 und $R_2$. Die beiden Anschlüsse des Serienresonanzkreises sind nun entweder parallel zu dem einen Teilzweig oder parallel zu dem zweiten Teilzweig zu schalten. Im Ausführungsbeispiel sind sie parallel zu dem oberen Teilzweig $S_1, R_1$ geschaltet.

Die beiden Widerstände $R_1$ und $R_2$ weisen unterschiedliche Widerstandswerte auf, die Widerstandsdifferenz ist ein Maß für die gewählte Unsymmetrie der beiden Teilzweige des Wechselrichter-Ausgangszweiges. In dem Ausführungsbeispiel wird ferner eine Steuerschaltungsanordnung 10 parallel zu dem Widerstand $R_2$ geschaltet, der als größerer Widerstand angenommen werden soll. Es ist jedoch ebenso möglich, die Steuerschaltungsanordnung parallel zu Widerstand $R_1$ zu schalten, wenn dieser den größeren Wert der beiden Wider-

stände $R_1$ und $R_2$ aufweist. Es ist ferner möglich, die Steuerschaltungsanordnung 10 in Reihe zu einem der Teilzweige zu schalten, hierbei bestimmt sich die Unsymmetrie allein durch den Durchgangswiderstand (Längswiderstand) $R_{DS}$ der Schaltungsanordnung 10.

Die Steuerschaltungsanordnung 10 wird wahlweise über eine Steuerspannung $u_{St}$ oder über eine Potentiometerstellung, Fig. 5a zeigt das hierfür eingesetzte Potentiometer POT, angesteuert. Die Steuerspannung $u_{St}$ oder die Potentiometerstellung bestimmen den Durchlaßwiderstand der Schaltungsanordnung 10, mithin den dem Widerstand $R_{DS}$ parallelgeschalteten Widerstand. Eine Symmetrie der beiden Teilzweige wird erreicht, wenn die Parallelschaltung aus größerem Widerstand $R_2$ und Durchgangswiderstand $R_{DSon}$ der Steuerschaltungsanordnung 10 dem Widerstand $R_1$ entspricht. Das höchste Maß an Unsymmetrie und mithin das geringste Tastverhältnis bei höchster Frequenz wird erreicht, wenn die Steuerschaltung 10 sperrt, bzw. ihren höchsten Längswiderstand aufweist. Die Unsymmetrie wird dann im wesentlichen durch das Verhältnis der beiden Widerstände $R_1$ und $R_2$ bestimmt. Hierdurch ist es einstellbar und der Betriebsbereich des Wechselrichters kann abgeglichen bzw. vorbestimmt werden.

Der in den Serienresonanzkreis eingefügte Steuerübertrager $T_2$-D weist für den selbstgeführten Wechselrichter zumindest zwei Sekundärwicklungen auf, $T_2$-A und $T_2$-C. Diese steuern gegensinnig kreuzweise die beiden elektronischen Schalter S1 und S2 des Wechselrichterzweiges. Die Sättigungseigenschaft dieses Übertragers $T_2$ ist aufgrund des Kernes und der Wicklungszahlen der Wicklungen vorgegeben. Sättigung tritt nach Erreichen einer vorbestimmten Spannungszeitfläche ein. Durch Variieren des Widerstandes $R_2$ kann bei Erhöhen der Sekundärs-Spannung jene Zeit verkürzt werden, die zum Erreichen der sättigungserzeugenden Spannungszeitfläche benötigt wird.

Fig. 5b zeigt beispielhaft das Ansteuerschema des zweiten elektronischen Schalters S2 mit der ihm zugeordneten Sekundärwicklung $T_2$-C des Steuerübertrager. Es wird angenommen, daß negativer Laststrom $i_w(t)$ durch die Primärwicklung des Steuerübertragers fließt, so daß die an der zweiten Sekundärwicklung anliegende Steuerspannung $u_2$ positiv ist, womit der den zweiten elektronischen Schalter S2 in diesem Ausführungsbeispiel bildende Leistungstransistor in Emitterschaltung durchgesteuert wird. Bei vorgegebenem Laststrom $i_w(t)$ kann mittels Variation (Modulation) des wirksamen Emitterwiderstandes $R_2 \| R_{DS}$ (Parallelschaltung aus $R_2$ und Durchlaßwiderstand $R_{DS}$ der Steuerschaltungsanordnung 10) - was gerade durch die Steuerschaltungsanordnung 10 geschieht - die Spannung $u_2$ beeinflußt werden. Wird diese bei größe-

rem wirksamen Emitterwiderstand $R_2 \| R_{DS}$ vergrößert, so wird der Steuerübertrager $T_2$ schneller gesättigt. Nach Eintreten der Sättigung beginnt der zweite Leistungshalbleiter $S_2$ zu sperren, der erste Leistungshalbleiter $S_1$ beginnt zu leiten. Anhand dieses Prinzips wird gezeigt, daß ein unveränderter Widerstand $R_1$ und ein modulierter zweiter Emitterwiderstand $R_2 \| R_{DS}$ gleichzeitig eine Frequenz- sowie Tastverhältnisänderung erwirken.

Vorzugsweise findet als steuerbarer Widerstand für die Steuerschaltungsanordnung ein MOS-FET Anwendung. Ebenso vorzugsweise werden als elektronische Schalter $S_1$ und $S_2$ Leistungstransistoren eingesetzt. Es versteht sich, daß jede Art von Leistungshalbleitern in die beiden Teilzweige geschaltet werden können und daß ebenso jede Art von steuerbarem Widerstand $R_{DS}$ inklusive eines Schalterelementes für die Steuerschaltungsanordnung 10 in Parallel oder Reihenschaltung Einsatz finden können.

Fig. 5a zeigt das Detailschaltbild einer Steuerschaltungsanordnung 10, in welcher der steuerbare Widerstand durch ein MOS-FET V4 gebildet ist. Zur Änderung seines Durchlaßwiderstandes $R_{DS}$ wird ein Potentiometer POT derart verändert, daß die GATE-Spannung des V4 variiert wird, wodurch sein Durchlaßwiderstand $R_{DS}$ geändert wird. Dies gilt für durchgeschalteten Transistor $V_3$ und Zufuhr einer positiven Gate-Versorgungsspannung für V4 über einen Vorspannwiderstand $R_5$. Fig. 5a zeigt ferner, wie mit der einen Sekundärwicklung des Zünderkennungs- Übertragers $T_1$ über einen weiteren MOS-FET V3 die dimmende Steuerschaltungsanordnung 10 abhängig von dem erfolgten Zünden der Gasentladungslampe aktiviert wird. Die beiden gegensinnig gewickelten Primärwicklungen $T_1$-A, $T_1$-B, wovon die eine in den Lastkreis und die andere in den Heizkreis der GE-Lampe geschaltet ist, erzeugen in der Sekundärwicklung $T_1$-C nur dann eine positive Spannung $u_e(t)$, wenn die GE-Lampe bereits gezündet hat. Aufgrund einer positiven Spannung $u_e(t)$ wird nun V3,POT,V4 und damit die Steuerschaltungsanordnung 10 aktiviert, ein Dimmbetrieb wird ermöglicht. Auf diese Weise kann sichergestellt werden, daß ein Helligkeitssteuern der GE-Lampe nur dann erfolgen kann, wenn diese bereits gezündet hat (s. auch Fig. 4).

Die Vorspannung für den das Maß der Unsymmetrie beeinflussenden MOS-FET V4 kann aus dem Lastkreis oder aus dem Versorgungsgleichspannungskreis + entnommen werden, ferner kann dem steuerbaren MOS-FET V4 an seinem Gate-Anschluß ein zeitabhängiger Schaltungskreis zum Steuern der Vorheizung und Zündung der Lampe zugeordnet werden. Dieser verändert das Frequenz- und Tastverhältnis der Wechselrichter-Ausgangsspannung $u_w(t)$ zu Beginn vor Zündung der GE-Lampe.

Fig. 11 zeigt ein Realisierungsbeispiel eines EVG mit einem Gleichrichter 19, zur Gleichrichtung einer Versorgungs-Wechselspannung. Ein Wechselrichter 20, der eine Ausgangs-Wechselgröße $u_W$(t) an den Lampen-Lastkreis X (s. Figur 1) abgibt, ist derart steuerbar, daß die Ausgangs-Wechselgröße $u_W$(t) in Frequenz und Tastverhältnis einstellbar ist. Der Gleichrichter 19 kann entfallen, wenn die Lampe GE (im Lastkreis X) aus einer Batterie oder einem Gleichstromnetz gespeist wird. Das Detailschaltbild des Ausgangszweiges des Wechselrichters 20 zeigt die bereits beschriebene Figur 4.

Figur 10a zeigt die in Figur 6 erläuterte Kennfläche F in einem Funktionsgeber 11, der abhängig von einer Eingangsgröße zwei Ausgangsgrößen für den Wechselrichter 20 abgibt. Der Funktionsgeber 11 ist beispielsweise durch ein ROM oder mittels nichtlinearer Kennlinien aufgebaut. $P_{soll}$ oder $u_{St}$ bilden seine Eingangsgröße, abhängig hiervon wird nur ein gültiges Paar von Ausgangsgrößen (Tastverhältnis d und Frequenz f) gemäß der eingestellten Steuerkurve II (oder einer ähnlichen) an den Wechselrichter 20 abgegeben.

Figur 10b zeigt eine alternative Form der Frequenz- und Tastverhältniseinstellung der Ausgangs-Wechselgröße $u_W$(t) des Wechselrichters 20. Hier wird über eine Führungsgröße f (Frequenz) und einen nichtlinearen Funktionsgeber 12 ein jeweiliges Paar von Frequenz und Tastverhältnis gebildet. Diese werden dem Wechselrichter 20 zugeführt. Die Helligkeitsvorgabe der Lampe GE über Frequenzvorgabe f gemäß Figur 10b und ein von der Frequenz f abhängiges Tastverhältnis d (entsprechend der von Funktionsgeber 12 festgelegten Steuerkurve/Kennlinie) können auch dahingehend modifiziert werden, daß als Führungsgröße das Tastverhältnis d eingesetzt wird und der Funktionsgeber 12 hiervon abhängig einen bestimmten Verlauf der Frequenz f erzeugt.

**Patentansprüche**

1. **Verfahren** zum Steuern der Helligkeit einer Gasentladungslampe (GE), die in einem mit einer Gleichrichter-Wechselrichter-Kombination (10,20) verbundenen Serienresonanzkreises ($L_1$,$C_1$) liegt, durch Verändern der Frequenz (f) und des Tastverhältnisses (D,d) der von dem Wechselrichter erzeugten und der Gasentladungslampe (GE) und dem Serienresonanzkreis ($X;L_1,C_1,GE$) zugeführten Ausgangs-Wechselgröße ($u_W$), dadurch **gekennzeichnet,** daß die Gasentladungslampe (GE) in einem Frequenzbereich betrieben wird, in dem sich die Abhängigkeit der Lampenleistung ($P_{ab}$) von der Frequenz (f) der Ausgangs-Wechselgröße ($u_W$) mit dem Tastverhältnis (D,d) als Parameter als Schar von Kennlinien (K1,K2,K3,...) darstellen läßt, von denen jede nach Art einer von einem maximalen Wert ausgehenden und unter Bildung eines Wendepunktes abfallenden Glockenkurve verläuft, wobei der maximale Wert der einzelnen Kennlinien (K1,K2,K3,...) der Schar umso geringer ist, je geringer das diesen
Kennlinien (K1,K2,K3,...) als Parameter zugeordnete Tastverhältnis ($d_1,d_2,d_3,...$) ist,
wobei die Frequenz (f) und das Tastverhältnis (D,d) jeweils so gewählt werden, daß der Betriebspunkt (B1,B2,B3,...) den Gasentladungslampe (GE) bei mindestens zwei für eine bestimmte Lampenleistung (Pab) zur Verfügung stehenden oder ausgewählten Kennlinien jeweils auf derjenigen Kennlinie zu liegen kommt, die bei dieser Lampenleistung die geringere Steilheit hat.

2. Verfahren nach Anspruch 1,
dadurch **gekennzeichnet,**
daß der maximale Wert der monoton fallenden Glockenkurven das jeweilige Maximum ist und
daß die Betriebspunkte (B1,B2,B3...) derart gewählt werden, daß die Lampenleistung ($P_{ab}$) linear von einer die Helligkeit der Gasentladungslampe (GE) vorgebenden Führungsgröße ($u_{St},P_{soll}$,f) abhängt.

3. Verfahren nach Anspruch 1,
dadurch **gekennzeichnet,**
daß die jeweilige Wahl der Betriebspunkte (B1,B2,B3...) durch unabhängige Vorgabe jeweils eines Paares aus Frequenz ($f_1,f_2,f_3...$) und Tastverhältnis ($d_1,d_2,d_3...$) für die Ausgangs-Wechselgröße ($u_W$) des Wechselrichters (20) getroffen wird,
womit jede beliebige Lampenleistung ($P_1,P_2,P_3...$) einstellbar wird.

4. Verfahren nach Anspruch 1 oder Anspruch 2,
dadurch **gekennzeichnet,**
daß über eine bzw. über die gemeinsame Führungsgröße ($u_{St},P_{soll}$) jeweils sowohl Frequenz ($f_1,f_2,f_3...$) als auch Tastverhältnis ($d_1,d_2,d_3...$) der Ausgangs-Wechselgröße ($u_W$) gemeinsam vorgegeben wird,
womit jede beliebige Lampenleistung ($P_1,P_2,P_3...$) einstellbar wird.

5. Verfahren nach einem der vorherstehenden Ansprüche,
dadurch **gekennzeichnet,**
daß eine lampenspezifische Steuerkurve (I,II,III) auf einer dreidimensionalen Kennfeld-Fläche ($P_{ab}=F(d,f)$) als Verbindung aller lampenspezifisch erwünschten Betriebspunkte (B1,B2,B3...) eingestellt wird und abhängig von einer bzw. von der Führungsgröße ($P_{soll}$,$u_{St}$) zwecks Dimmen durchfahrbar ist und

daß die lampenspezifische Steuerkurve (I,II) derart nichtlinear verläuft, daß die Abhängigkeit der Lampenleistung ($P_{ab}$) von der Führungsgröße ($P_{soll}$,$u_{St}$) linearisiert wird.

6. **Verfahren** zum Betreiben einer direkt heizbaren Gasentladungslampe (GE), zum Zweck der Helligkeitsänderung, welche Teil eines Serienresonanzkreises ($L_1$,$C_1$) ist und deren Heizwendel über eine Parallel-Heizreaktanz ($C_0$) heizbar sind, bei welchem Verfahren sowohl die Frequenz (f) als auch das Tastverhältnis (D,d) einer von einem elektronischen Vorschaltgerät (EVG) erzeugten und dem Serienresonanzkreis ($L_1$,$C_1$) zugeführten Ausgangs-Wechselgröße ($u_W$) verändert wird,

dadurch **gekennzeichnet,**

daß eine zur Helligkeitsänderung durchlaufbare Steuerkurve (I,II,III) derart gewählt wird, daß die sich für jeweilige Kombinationen von Tastverhältnis und Frequenz ($f_1$,$d_1$;$f_2$,$d_2$;$f_3$,$d_3$...) der Ausgangs-Wechselgröße ($u_W$) einstellenden, stationären Betriebspunkte (B1,B2,B3), die bestimmten Lampen-Helligkeiten ($P_1$,$P_2$,$P_3$...) entsprechen, in dem konvex gekrümmten Bereich einer lampenspezifischen, von der Frequenz (f) und dem Tastverhältnis (d,D) abhängigen Lampenhelligkeits-Kennfläche (F) liegen.

7. Verfahren nach Anspruch 6, dadurch **gekennzeichnet,**

daß zur Helligkeitsabsenkung der Gasentladungslampe (GE) die Frequenz (f), ausgehend von der Nennbetriebs-Frequenz ($f_N$) der Ausgangs-Wechselgröße ($u_W$) erhöht wird und gleichzeitig ihr für den Nennbetrieb symmetrisches Tastverhältnis ($d_N$,$D_N$) reduziert wird.

8. Verfahren nach Anspruch 6 oder Anspruch 7, dadurch **gekennzeichnet,**

daß der Verlauf der Steuerkurven (I,II) so angepaßt ist, daß eine lineare Helligkeitsänderung abhängig von einer Potentionmeterstellung (POT) oder einer Steuerspannung ($u_{St}$) einstellbar ist.

9. Verfahren nach einem der Ansprüche 6 bis 8, dadurch **gekennzeichnet,**

daß die Änderung der Helligkeit der Gasentladungslampe (GE) erst nach deren Zündung durchgeführt wird.

**Claims**

1. A method of controlling the brightness of a gas discharge lamp (GE), disposed in a series resonant circuit ($L_1$, $C_1$) connected to a rectifier-inverter combination (10, 20), by varying the frequency (f) and the pulse duty factor (D, d) of the output alternating quantity ($u_w$) generated by the inverter and supplied to the gas discharge lamp (GE) and to the series resonant circuit (X; $L_1$, $C_1$, GE),
characterised in that,
the gas discharge lamp (GE) is operated in a frequency range in which the dependence of the lamp power ($P_{ab}$) on the frequency (f) of the output alternating quantity ($u_w$),with the pulse duty factor (D, d) as parameter, can be represented as a family of characteristic curves (K1, K2, K3....), each of which varies in the form of a bell curve starting from a maximum value and decreasing via a point of inflection, the maximum value of the individual characteristic curves (K1, K2, K3....) in the family decreasing with the pulse duty factor ($d_1$, $d_2$, $d_3$...) associated as parameter with these characteristic curves (K1, K2, K3....),
the frequency (f) and the pulse duty factor (D, d) each being chosen so that the operating point (B1, B2, B3,....) of the gas discharge lamp (GE), in the case of at least two characteristic curves selected or available for a given lamp power (Pab), comes to lie on that characteristic curve which is less steep at the aforementioned lamp power.

2. A method according to claim 1, characterised in that,
the maximum value of the monotonically decreasing bell curve is the respective maximum and
the operating points (B1, B2, B3....) are chosen so that the lamp power ($P_{ab}$) depends in linear manner on a command variable ($u_{St}$, $P_{soll}$, f) which determines the brightness of the gas discharge lamp (GE).

3. A method according to claim 1, characterised in that,
each operating point (B1, B2, B3....) is chosen by independently presetting a respective frequency $f_1$, $f_2$, $f_3$...) paired with a pulse duty factor ($d_1$, $d_2$, $d_3$...) for the output alternating quantity ($u_w$) of the rectifier (20), so that any desired lamp power ($P_1$, $P_2$, $P_3$...) can be set.

4. A method according to claim 1 or claim 2, characterized in that,
through one or through the common command

variable ($U_{St}$,$P_{soll}$), in each case the frequency $f_1$, $f_2$, $f_3$...) and the pulse duty factor ($d_1$, $d_2$, $d_3$...) of the output alternating quantity ($u_w$) are preset together, so that any desired lamp power ($P_1$, $P_2$, $P_3$...) can be set.

5. A method according to any of the preceding claims,
characterized in that,
a control curve (I, II, III) specific to the lamp and joining all desired operating points (B1, B2, B3....) specific to the lamp is set on a three-dimensional characteristic surface ($P_{ab}$ = F(d, f)) and can be run through for the purpose of dimming, in dependence on a or the command variable ($P_{set}$, $u_{St}$), and
the control curve (I, II) specific to the lamp is non-linear in a manner such that the relation between the lamp power ($P_{ab}$) and the command variable ($P_{set}$, $u_{St}$) is made linear.

6. A method of operating a directly heatable gas discharge lamp (GE), for the purpose of altering the brightness, which lamp forms part of a series resonant circuit ($L_1$, $C_1$) and the heating coil of which is heatable by a parallel heating reactor ($C_0$), in which method both the frequency (f) and the pulse duty factor (D, d) of an output alternating quantity ($u_w$), generated by an electronic ballast (EVG) and supplied to the series resonant circuit ($L_1$, $C_1$), are varied,
characterised in that,
a control curve (I, II, III) for running through in order to alter the brightness is chosen so that the stationary operating points (B1, B2, B3 ....) set for various combinations of the pulse duty factor and the frequency ($f_1$, $d_1$; $f_2$, $d_2$, $f_3$, $d_3$...) of the output alternating quantity ($u_w$) and corresponding to specific lamp brightnesses ($P_1$, $P_2$, $P_3$...) lie in the convex curved region of a lamp brightness characteristic surface (F) specific to the lamp and depending on the frequency (f) and the pulse duty factor (d, D).

7. A method according to claim 6,
characterized in that,
in order to reduce the brightness of the gas discharge lamp (GE), the frequency (f) is increased, starting from the rated operating frequency ($f_N$) of the output alternating quantity ($u_w$), and a simultaneous reduction is made in its pulse duty factor ($d_N$, $D_N$) which is symmetrical for rated operation.

8. A method according to claim 6 or claim 7,
characterised in that,
the shape of the control curves (I, II) is adjusted so that a linear variation in brightness can be set in dependence on a potentiometer position (POT) or a control voltage ($u_{St}$).

9. A method according to any of claims 6 to 8,
characterised in that,
the variation in brightness of the gas discharge lamp (GE) is made only after it has been ignited.

**Revendications**

1. Procédé de commande de l'intensité lumineuse d'une lampe à décharge (GE) montée dans un circuit à résonance série ($L_1$, $C_1$) connecté à une combinaison redresseur-onduleur consistant à faire varier la fréquence (f) et le rapport cyclique (D, d) de la grandeur alternative ($u_w$) de base produite par l'onduleur et envoyée à la lampe à décharge (GE) et au circuit à résonance série ($L_1$, $C_1$), caractérisé par le fait que l'on fait alimente la lampe à décharge (GE) dans une plage de fréquences à l'intérieur de laquelle la relation entre la puissance de la lampe ($P_{ab}$) et la fréquence (f) de la grandeur alternative ($u_w$) de base peut être représentée sous forme de famille de courbes caractéristiques (K1, K2, K3, ...) avec le rapport cyclique (D, d) comme paramètre, courbes qui ont chacune une forme de cloche qui part d'un maximum et descend en formant un point d'inflexion, le maximum de chacune des courbes caractéristiques (K1, K2, K3, ...) de la famille étant d'autant plus faible que le rapport cyclique ($d_1$, $d_2$, $d_3$, ...) associé en tant que paramètre est plus faible, la fréquence (f) et le rapport cyclique (D, d) étant respectivement choisis de manière telle que le point de fonctionnement (B1, B2, B3 ...) de la lampe à décharge (GE), pour au moins deux courbes caractéristiques disponibles ou sélectionnées pour une puissance de lampe ($P_{ab}$) donnée, soit situé sur la courbe caractéristiques qui pour cette puissance de la lampe présente la pente la plus faible.

2. Procédé selon la revendication 1, caractérisé par le fait que la valeur maximale de la portion descendante monotone de la courbe en cloche constitue le maximum concerné et par le fait que l'on sélectionne les points de fonctionnement (B1, B2, B3, ...) de telle sorte qu'il existe une relation linéaire entre la puissance de la lampe ($P_{ab}$) et une grandeur de référence ($u_{St}$, $P_{soll}$, f) qui détermine l'intensité lumineuse de la lampe à décharge (GE).

3. Procédé selon la revendication 1, caractérisé par le fait que l'on opère la sélection des points de fonctionnement (B1, B2, B3, ...) en fixant chaque fois pour la grandeur alternative ($u_W$) de base de l'onduleur (20) un couple formé de la fréquence ($f_1$, $f_2$, $f_3$, ...) et du rapport cyclique ($d_1$, $d_2$, $d_3$, ...), ce qui permet de régler n'importe quelle puissance de lampe ($P_1$, $P_2$, $P_3$, ...).

4. Procédé selon la revendication 1 ou 2, caractérisé par le fait que l'on fixe simultanément par une ou par la même grandeur de référence ($u_{St}$, $P_{soll}$) à la fois la fréquence ($f_1$, $f_2$, $f_3$, ...) et le rapport cyclique ($d_1$, $d_2$, $d_3$, ...) de la grandeur alternative ($u_W$) de base ce qui permet de régler n'importe quelle puissance de lampe ($P_1$, $P_2$, $P_3$, ...).

5. Procédé selon l'une des revendications précédentes, caractérisé par le fait que dans un champ caractéristique ($P_{ab} = F(d, f)$) tridimensionnel on sélectionne la courbe de commande (I, II, III) spécifique à la lampe en tant que liaison de tous les points de fonctionnement souhaités (B1, B2, B3...) spécifiques et aux fins de faire varier l'intensité lumineuse on la suit en fonction d'une ou de la grandeur de référence ($P_{soll}$, $u_{St}$) et par le fait que la courbe de commande (I, II) spécifique de la lampe n'est pas linéaire de telle sorte que la relation puissance de la lampe ($P_{ab}$) grandeur de référence ($P_{soll}$, $u_{St}$) devienne linéaire.

6. Procédé pour alimenter aux fins de faire varier l'intensité lumineuse une lampe à décharge (GE) à chauffage direct qui est montée dans un circuit à résonance série ($L_1$, $C_1$) et dont le filament est chauffé par une réactance de chauffage ($C_0$) parallèle, procédé dans lequel on fait varier aussi bien la fréquence (f) que le rapport cyclique (D, d) de la grandeur alternative ($u_W$) de base produite par un ballast électronique (EVG) et le circuit à résonance série ($L_1$, $C_1$), caractérisé par le fait que l'on sélectionne une courbe de commande (I, II, III) de variation de l'intensité lumineuse de telle sorte que les points de fonctionnement (B1, B2, B3) stationnaires obtenus pour les combinaisons rapport cyclique et fréquence ($f_1$, $d_1$; $f_2$, $d_2$; $f_3$, $d_3$...) de la grandeur alternative ($u_W$) de base qui correspondent à des intensités lumineuses ($P_1$, $P_2$, $P_3$...) données soient situés dans la zone à courbure convexe d'un champ caractéristique (F) d'intensité lumineuse spécifique de la lampe dépendant de la fréquence (f) et du rapport cyclique (d, D).

7. Procédé selon la revendication 6, caractérisé par le fait que pour abaisser l'intensité lumineuse de la lampe à décharge (GE) on augmente la fréquence (f) à partir de la fréquence ($f_N$) nominale de la grandeur alternative ($u_W$) de base et simultanément on diminue son rapport cyclique ($d_N$, $D_N$) symétrique en fonctionnement nominal.

8. Procédé selon la revendication 6 ou 7, caractérisé par le fait que l'on adapte le tracé des courbes de commande (I, II) de telle sorte que l'on puisse obtenir une variation linéaire de l'intensité lumineuse en fonction d'une position du potentiomètre (POT) ou d'une tension de commande ($u_{St}$).

9. Procédé selon l'une des revendications 6 à 8, caractérisé par le fait que la variation d'intensité lumineuse de la lampe à décharge (GE) n'est opérée qu'après l'amorçage de celle-ci.

FIG. 1

FIG. 2

FIG. 3

13

FIG. 4

FIG. 5a

FIG. 5b

FIG. 6

FIG. 7

reine Frequensteuerung
$P_{ab}(f)$

FIG. 8

reine Tastverhältnissteuerung
$P_{ab}(d)$

o o o o o Kombination
$P_{ab}(d,f)$

FIG. 9

FIG. 10a

FIG. 10b

FIG. 11